# EUROPÄISCHE PATENTSCHRIFT

(11) **EP 0 453 922 B1**
(45) Veröffentlichungstag und Bekanntmachung des Hinweises auf die Patenterteilung: **28.07.1993**
(21) Anmeldenummer: 91106016.8
(22) Anmeldetag: 16.04.1991
(51) Int. Cl.: A01N 43/653, A01N 55/00, A01N 25/02

(54) **Verwendung von Kupfersalzen als Kristallisationsinhibitoren**
Use of copper salts for inhibiting crystallisation
Utilisation de sels de cuivre comme inhibiteurs de cristallisation

(30) Priorität: 27.04.1990 DE 4013524
(43) Veröffentlichungstag der Anmeldung: 30.10.1991
(73) Patentinhaber: BAYER AG, 51368 Leverkusen (DE)
(72) Erfinder: Sommer, Herbert, Dr., W-5650 Solingen 1 (DE); Horstmann, Heinz-Otto, Dr., W-5060 Bergisch-Gladbach 1 (DE); Wangermann, Klaus, Dr., W-4150 Krefeld (DE); Engelhardt, Ulrich, Dr., W-5090 Leverkusen 1 (DE); Reizlein, Karl, Dr., W-5000 Köln 80 (DE); Priesnitz, Uwe, Dr., W-5650 Solingen 1 (DE)

(56) Entgegenhaltungen:
- EP-A- 0 095 242
- EP-A- 0 391 168
- EP-A- 0 391 171
- WO-A-86/07081
- WO-A-89/08395
- DE-A- 3 630 193
- FR-A- 2 271 219
- US-A- 4 797 274

## Beschreibung

Die vorliegende Erfindung betrifft die neue Verwendung von Kupfersalzen zur Verhinderung der Kristallisation beim Ausbringen von wäßrigen Spritzbrühen auf Basis bestimmter fungizider Wirkstoffe.

In Spritzgeräten, die üblicherweise zur Ausbringung wäßriger Formulierungen von Pflanzenbehandlungsmitteln verwendet werden, sind mehrere Filter sowie Düsen vorhanden. So befinden sich zum Beispiel Saugfilter zwischen Ansaugteil und Tankpumpe und ferner Druckfilter, welche nach der Pumpe im Druckbereich angeordnet sind. Außerdem können auch Düsenfilter enthalten sein, die sich direkt vor den Spritzdüsen befinden. Alle diese Filter sowie auch die Düsen können bei der Ausbringung von wäßrigen Spritzbrühen auf Basis fester Wirkstoffe mehr oder weniger leicht durch auskristallisierenden Wirkstoff verstopfen.

Es ist bereits bekannt, daß die nachstehend genannten Azol-Derivate fungizid wirksam sind und in Form von wäßrigen Spritzbrühen auf Pflanzen und/oder deren Lebensraum appliziert werden können:
1-(4-Chlorphenyl)-4,4-dimethyl-3-(1,2,4-triazol-1-yl-methyl)-pentan-3-ol (Tebuconazole),
1-(4-Chlorphenoxy)-3,3-dimethyl-1-(1,2,4-triazol-1-yl)-butan-2-on (Triadimefon),
1-(4-Chlorphenoxy)-3,3-dimethyl-1-(1,2,4-triazol-1-yl)-butan-2-ol (Triadimenol),
1-(4-Phenyl-phenoxy)-3,3-dimethyl-1-(1,2,4-triazol-1-yl)-butan-2-ol (Bitertanol),
1-(2-Chlorphenyl)-2-(1-chlor-cycloprop-1-yl)-3-(1,2,4-triazol-1-yl)-propan-2-ol,
1-(4-Fluorphenyl)-1-(2-fluorphenyl)-2-(1,2,4-triazol-1-yl)-ethan-1-ol (Flutriafol),
1-(1,2,4-Triazol-1-yl)-2-(2,4-dichorphenyl)-hexan-2-ol (Hexaconazole),
1-[(Bis-(4-fluorphenyl)-methylsilyl)-methyl]-1H-1,2,4-triazol (Flusilazole),
1-(4-Chlorphenyl)-2-(1,2,4-triazol-1-yl)-4,4-dimethyl-pent-1-en-3-ol (Uniconazole),
1-(2,4-Dichlorphenyl)-2-(1,2,4-triazol-1-yl)-4,4-dimethyl-pent-1-en-3-ol (Diniconazole),
1-(4-Chlorphenyl)-1-(1-cyclopropyl-ethyl)-2-(1,2,4-triazol-1-yl)-ethan-1-ol (Cyproconazole) und
1-(4-Chlorphenyl)-3-phenyl-3-cyano-4-(1,2,4-triazol-1-yl)-butan (Myclobutanil).

(vgl. EP-A 0 040 345, DE-C 2 201 063, DE-C 2 324 010, EP-A 0 297 345, EP-A 0 015 756, US-A 4 551 469, EP-A 0 068 813, DE-A 2 838 847, DE-A 3 010 560, DE-A 3 406 993 und DE-A 2 821 971).

Zur Herstellung derartiger Spritzbrühen lassen sich oberflächenaktive Stoffe, wie zum Beispiel Alkylarylpolyglykolether, einsetzen. Nachteilig bei der Verwendung dieser herkömmlichen Formulierungen ist aber, daß die Wirkstoffe zur Kristallisation neigen und sowohl Filter als auch Düsen der Spritzgeräte verstopfen können.

Aus der EP-A 0 095 242 ist bekannt, daß sich Formulierungen, die pestizid wirksame Stoffe, wie zum Beispiel bestimmte Azol-Derivate, eine organische Säure und ein polares Solvens enthalten, mit Wasser verdünnen und durch Spritzapplikation verwenden lassen. Der Einsatz von Kupfersalzen oder anderen Substanzen zur Verhinderung von Kristallbildung wird nicht erwähnt.

Weiterhin geht aus der DE-A 3 630 193 und der FR-A 2 271 219 hervor, daß Komplexe aus bestimmten Azol-Derivaten und Kupfersalzen eine bessere fungizide Wirksamkeit besitzen als die freien Azole. Eine Verwendung von Kupfersalzen als Kristallisationshemmer beim Ausbringen von verdünnten, wäßrigen Formulierungen auf Basis von Azolen oder anderen pestiziden Wirkstoffen wird jedoch nicht offenbart.

In der WO-A 89-08 395 wird beschrieben, daß Kombinationen aus Kupfersalzen von Tallöl, Fettsäuren, Harzsäuren und metallischem Kupfer fungizid wirksam sind. Es werden aber weder Kupfersalze im Gemisch mit Azolen noch die Verwendung von Kupfersalzen als Kristallisationsinhibitoren erwähnt.

Es wurde nun gefunden, daß sich Kupfer (I)- bzw. Kupfer (II)-Salze der Formel

CuₘXₙ (I)

in welcher
- X: für Halogenid, Rhodanid, Sulfat, Alkylsulfonat, Alkylarylsulfonat oder für einen Rest der Formel

R-COO^{⊖}

steht, worin
- R: für gegebenenfalls durch Halogen, Cycloalkyl oder Hydroxy substituiertes Alkyl, gegebenenfalls durch Halogen, Cycloalkyl oder Hydroxy substituiertes Alkenyl, gegebenenfalls durch Halogen, Alkyl, Cycloalkyl oder Hydroxy substituiertes Cycloalkyl oder gegebenenfalls durch Halogen, Alkyl, Cycloalkyl oder Hydroxy substituiertes Cycloalkenyl steht, oder für gegebenenfalls durch Halogen, Amino, Hydroxy und/oder Acetyloxy substituiertes Phenyl oder Naphthyl steht,

oder
- X: für ein Anion einer aliphatischen oder aromatischen Dicarbonsäure, ein Anion einer aliphatischen Hydroxydicarbonsäure, ein Anion einer aliphatischen Hydroxy-tricarbonsäure, ein Anion der Abietinsäure oder für ein Anion steht, das sich von einer gegebenenfalls substituierten 1,3-Dicarbonyl-Verbindung, von Saccharin oder von der Ascorbinsäure ableitet,
- m: für 1, 2 oder 3 steht und
- n: für 1 oder 2 steht,

beim Ausbringen von wäßrigen Spritzbrühen, die
A) mindestens ein Azol-Derivat der Formel 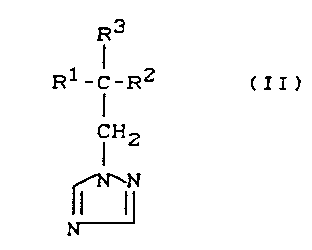 in welcher
   a)
      - R¹: für 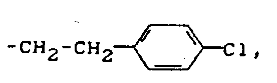
      - R²: für tert.-Butyl steht und
      - R³: für Hydroxy steht,
      oder
   b)
      - R¹: für 4-Fluorphenyl steht,
      - R²: für 2-Fluorphenyl steht und
      - R³: für Hydroxy steht,
      oder
   c)
      - R¹: für 2,4-Dichlorphenyl steht,
      - R²: für n-Butyl steht und
      - R³: für Hydroxy steht,
      oder
   d)
      - R¹: für 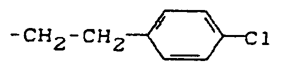 steht,
      - R²: für Phenyl steht und
      - R³: für Cyano steht,
      oder
   e)
      - R¹: für 2-Chlor-benzyl steht,
      - R²: für 1-Chlor-cycloprop-1-yl steht
      und
      - R³: für Hydroxy steht,
      oder
   f)
      - R¹: für 4-Chlorphenyl steht,
      - R²: für 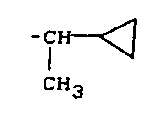 steht und
      - R³: für Hydroxy steht,
   und/oder
   mindestens ein Azol-Derivat der Formel 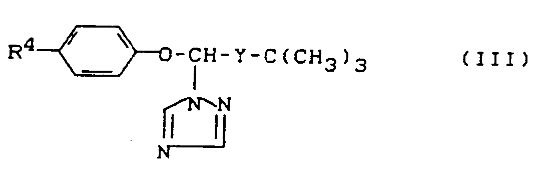 in welcher
   a)
      - Y: für -CH(OH) steht und
      - R⁴: für Chlor oder Phenyl steht,
      oder
   b)
      - Y: für CO steht und
      - R⁴: für Chlor steht,
   und/oder
   mindestens ein Azol-Derivat der Formel 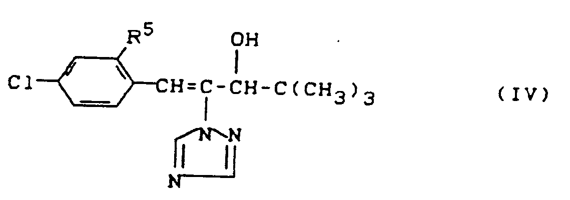 in welcher
   - R⁵: für Wasserstoff oder Chlor steht,
   und/oder 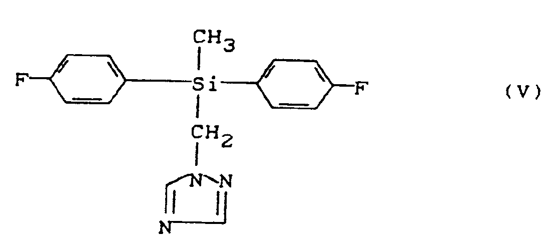
   und
B) gegebenenfalls einen oder mehrere weitere Wirkstoffe sowie Zusatzstoffe
enthalten, zur Verhinderung der Kristallisation von Wirkstoffen der Formeln (II) bis (V) verwenden lassen.

Es ist als äußerst überraschend zu bezeichnen, daß die Kristallisationsneigung von Azol-Derivaten der Formeln (II) bis (V) durch die erfindungsgemäße Verwendung von Kupfer(I)- bzw. Kupfer(II)-salzen der Formel (I) stark herabgesetzt wird. Vor allem war nicht zu erwarten, daß Kupfer(I)- bzw. Kupfer(II)-Salze der Formel (I) wesentlich besser als andere vergleichbar wirkende Stoffe für den angegebenen Zweck geeignet sind.

Die Verwendung von Kupfer(I)- bzw. Kupfer(II)-Salzen der Formel (I) in wäßrigen Formulierungen auf Basis von fungizid wirksamen Azol-Derivaten der Formeln (II) bis (V) weist eine Reihe von Vorteilen auf. So handelt es sich bei den Kupfer(I)- bzw. Kupfer(II)-Salzen der Formel (I) um Stoffe, die problemlos zu handhaben sind. Ferner wird durch den Einsatz der Stoffe der Formel (I) verhindert, daß beim Versprühen von wäßrigen Formulierungen, die Wirkstoffe der Formeln (II) bis (V) enthalten, sowohl die Filter als auch die Düsen der Spritzgeräte verstopfen. Vorteilhaft ist auch, daß Kupfer(I)- bzw. Kupfer(II)-Salze der Formel (I) im Pflanzenschutz keinerlei unerwünschte Nebenwirkungen ausüben.

Die erfindungsgemäß verwendbaren Kupfer(I)- bzw. Kupfer(II)-Salze sind durch die Formel (I) allgemein definiert. Vorzugsweise verwendbar sind diejenigen Stoffe der Formel (I), in denen
- X: für Chlor, Bromid, Iodid, Rhodanid, Sulfat, Alkylsulfonat mit 1 bis 4 Kohlenstoffatomen, Alkylbenzol-sulfonat mit 1 bis 14 Kohlenstoffatomen im Alkylteil oder für einen Rest der Formel

R-COO^{⊖}

steht, worin
- R: für gegebenenfalls einfach oder mehrfach durch Fluor und/oder Chlor substituiertes Alkyl mit 1 bis 18 Kohlenstoffatomen, gegebenenfalls durch Hydroxy substituiertes Alkyl mit 1 bis 18 Kohlenstoffatomen, gegebenenfalls durch Cycloalkyl mit 3 bis 7 Kohlenstoffatomen substituiertes Alkyl mit 1 bis 18 Kohlenstoffatomen, gegebenenfalls einfach oder mehrfach durch Fluor und/oder Chlor substituiertes Alkenyl mit 3 bis 10 Kohlenstoffatomen, gegebenenfalls durch Hydroxy oder Cycloalkyl mit 3 bis 7 Kohlenstoffatomen substituiertes Alkenyl mit 3 bis 18 Kohlenstoffatomen, gegebenenfalls einfach oder mehrfach durch Fluor und/oder Chlor substituiertes Cycloalkyl mit 3 bis 8 Kohlenstoffatomen, gegebenenfalls durch Hydroxy, Alkyl mit 1 bis 4 Kohlenstoffatomen oder Cycloalkyl mit 3 bis 7 Kohlenstoffatomen substituiertes Cycloalkyl mit 3 bis 8 Kohlenstoffatomen, gegebenenfalls einfach oder mehrfach durch Fluor und/oder Chlor substituiertes Cycloalkenyl mit 5 bis 8 Kohlenstoffatomen, gegebenenfalls durch Hydroxy, Alkyl mit 1 bis 4 Kohlenstoffatomen oder Cycloalkyl mit 3 bis 7 Kohlenstoffatomen substituiertes Cycloalkenyl mit 5 bis 8 Kohlenstoffatomen, gegebenenfalls einfach bis dreifach, gleichartig oder verschieden durch Fluor, Chlor, Brom, Amino, Hydroxy und/oder Acetyloxy substituiertes Phenyl oder Naphthyl steht,

oder
- X: für ein Anion einer aliphatischen Dicarbonsäure mit 2 bis 8 Kohlenstoffatomen, für ein Anion einer Benzoldicarbonsäure, für ein Anion einer aliphatischen Hydroxydicarbonsäure und 3 bis 8 Kohlenstoffatomen und 1 bis 3 Hydroxygruppen, für ein Anion einer aliphatischen Hydroxy-tricarbonsäure mit 4 bis 8 Kohlenstoffatomen und 1 bis 3 Hydroxygruppen, ein Anion der Abietinsäure oder für ein Anion steht, das sich von einer gegebenenfalls durch Alkoxy-Gruppen substituierten aliphatischen 1,3-Dicarbonyl-Verbindung mit 5 bis 10 Kohlenstoffatomen, von Saccharin oder von der Ascorbinsäure ableitet,
- m: für 1, 2 oder 3 steht und
- n: für 1 oder 2 steht.

Dabei richten sich die Zahlen der Indices m und n nach der Oxidationsstufe des Kupfers und der Wertigkeit des jeweiligen Anions.

Besonders bevorzugt sind diejenigen Stoffe der Formel (I), in denen
- X: für Chlorid, Bromid, Iodid, Rhodanid, Sulfat, Methylsulfonat, Ethylsulfonat, Alkylbenzol-sulfonat mit 1 bis 12 Kohlenstoffatomen im Alkylteil oder für einen Rest der Formel

R-COO^{⊖}

steht, worin
- R: für gegebenenfalls einfach bis dreifach durch Fluor und/oder Chlor substituiertes Alkyl mit 1 bis 17 Kohlenstoffatomen, gegebenenfalls einfach bis dreifach durch Hydroxy oder Cycloalkyl mit 3 bis 6 Kohlenstoffatomen substituiertes Alkyl mit 1 bis 17 Kohlenstoffatomen, gegebenenfalls einfach bis dreifach durch Fluor und/oder Chlor substituiertes Alkenyl mit 3 bis 17 Kohlenstoffatomen und 1 bis 3 Doppelbindungen, gegebenenfalls einfach bis dreifach durch Hydroxy oder Cycloalkyl mit 3 bis 6 Kohlenstoffatomen substituiertes Alkenyl mit 3 bis 17 Kohlenstoffatomen und 1 bis 3 Doppelbindungen, gegebenenfalls einfach bis dreifach durch Fluor und/oder Chlor substituiertes Cycloalkyl mit 3 bis 7 Kohlenstoffatomen, gegebenenfalls einfach bis dreifach durch Hydroxy, Alkyl mit 1 bis 3 Kohlenstoffatomen oder Cycloalkyl mit 3 bis 6 Kohlenstoffatomen substituiertes Cycloalkyl mit 3 bis 7 Kohlenstoffatomen, gegebenenfalls einfach bis dreifach durch Fluor und/oder Chlor substituiertes Cycloalkenyl mit 5 bis 7 Kohlenstoffatomen, gegebenenfalls durch Hydroxy, Alkyl mit 1 bis 3 Kohlenstoffatomen oder Cycloalkyl mit 3 bis 7 Kohlenstoffatomen substituiertes Cycloalkenyl mit 5 bis 7 Kohlenstoffatomen, gegebenenfalls einfach oder zweifach, gleichartig oder verschieden durch Fluor, Chlor, Brom, Amino, Hydroxy und/oder Acetyloxy substituiertes Phenyl oder Naphthyl steht,

oder
- X: für ein Anion einer Alkyldicarbonsäure mit 2 bis 8 Kohlenstoffatomen, für ein Anion einer Benzoldicarbonsäure, für ein Anion einer Hydroxyalkyldicarbonsäure mit 3 bis 6 Kohlenstoffatomen und 1 bis 3 Hydroxygruppen, für ein Anion einer Hydroxyalkyl-tricarbonsäure mit 4 bis 7 Kohlenstoffatomen und 1 bis 3 Hydroxygruppen, ein Anion der Abietinsäure oder für ein Anion steht, das sich von einer gegebenenfalls durch ein oder zwei Methoxy oder Ethoxy-Gruppen substituierten Alkyl-1,3-dicarbonyl-Verbindung mit 5 bis 8 Kohlenstoffatomen, von Saccharin oder von der Ascorbinsäure ableitet,
- m: für 1, 2 oder 3 steht und
- n: für 1 oder 2 steht.

Als Beispiele für Kupfersalze der Formel (I) seien genannt:
Kupfer(I)chlorid
Kupfer(II)chlorid
Kupfer(II)bromid, Kupfer(I)bromid
Kupfer(I)iodid
Kupfer(I)rhodanid
Kupfer(II)sulfat
Kupfer(II)methylsulfonat
Kupfer(II)n-dodecyl-benzolsulfonat
Kupfer(II)-Salze von
Essigsäure
Chloressigsäure
Trifluoressigsäure
Propionsäure
Hexancarbonsäure
2-Ethyl-hexan-carbonsäure
Octancarbonsäure
n-Dodecancarbonsäure
Palmitinsäure
Stearinsäure
Milchsäure
Sorbinsäure
Ölsäure
Linolsäure
Linolensäure
Cyclohexancarbonsäure
Benzoesäure
4-Chlor-benzoesäure
2-Amino-benzoesäure
Salicylsäure
Acetyl-salicylsäure
Naphthalin-1-carbonsäure
Naphthalin-2-carbonsäure
Oxalsäure
Malonsäure
Bernsteinsäure
Korksäure
Phthalsäure
Terephthalsäure
Isophthalsäure
Tartronsäure
Äpfelsäure
Weinsäure
Citronensäure
Abietinsäure
Saccharin
Acetylaceton
Acetessigester
Ascorbinsäure.

Die Kupfersalze der Formel (I) sind bekannt.

Erfindungsgemäß können einzelne Kupfersalze oder auch Gemische von Kupfersalzen der Formel (I) eingesetzt werden.

Die in den erfindungsgemäß verwendbaren wäßrigen Spritzbrühen enthaltenen Azolderivate sind durch die Formeln (II) bis (V) definiert. Es können einzelne oder auch mehrere oder folgenden Azol-Derivate enthalten sein.

1-(4-Chlorphenyl)-4,4-dimethyl-3-(1,2,4-triazol-1-yl-methyl)-pentan-3-ol der Formel

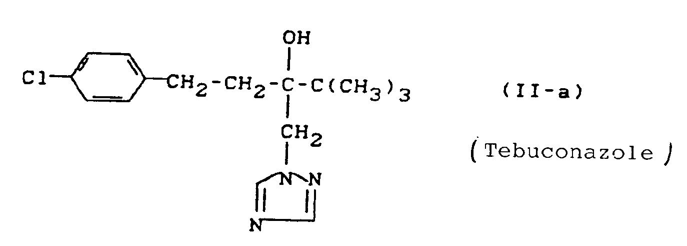

1-(4-Fluorphenyl)-1-(2-fluorphenyl)-2-(1,2,4-triazol-1-yl)-ethan-1-ol der Formel

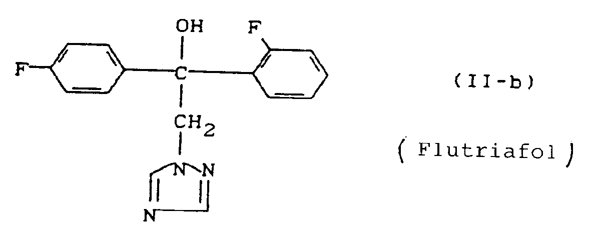

1-(1,2,4-Triazol-1-yl)-2-(2,4-dichlorphenyl)-hexan-2-ol der Formel

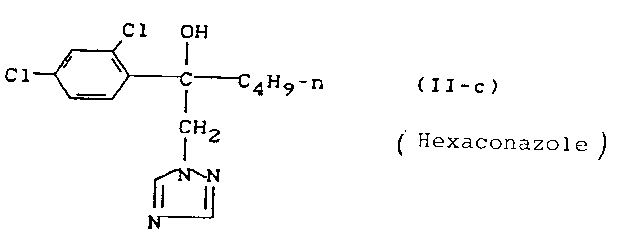

1-(4-Chlorphenyl)-3-phenyl-3-cyano-4-(1,2,4-triazol-1-yl)-butan der Formel

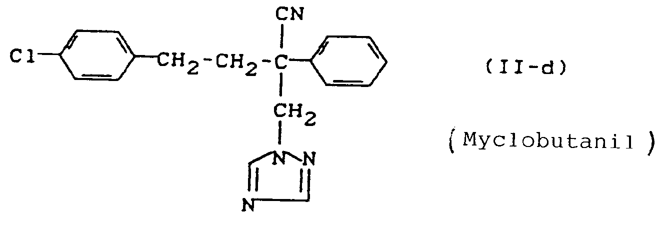

1-(2-Chlorphenyl)-2-(1-chlor-cycloprop-1-yl)-3-(1,2,4-triazol-1-yl)-propan-2-ol der Formel

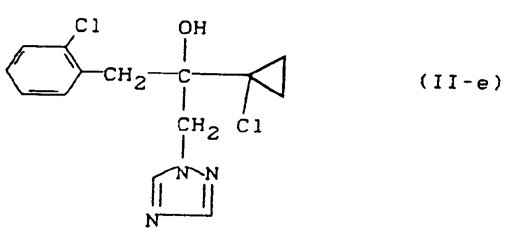

1-(4-Chlorphenyl)-1-(1-cyclopropyl-ethyl)-2-(1,2,4-triazol-1-yl)-ethan-1-ol der Formel

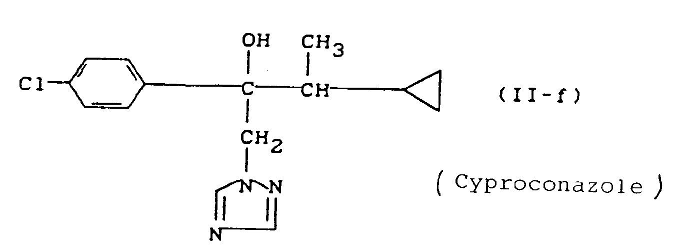

1-(4-Chlorphenoxy)-3,3-dimethyl-1-(1,2,4-triazol-1-yl)butan-2-ol der Formel

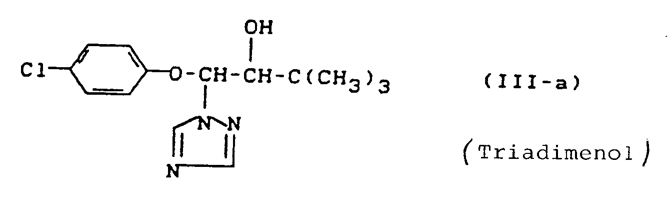

1-(4-Phenyl-phenoxy)-3,3-dimethyl-1-(1,2,4-triazol-1-yl)-butan-2-ol der Formel

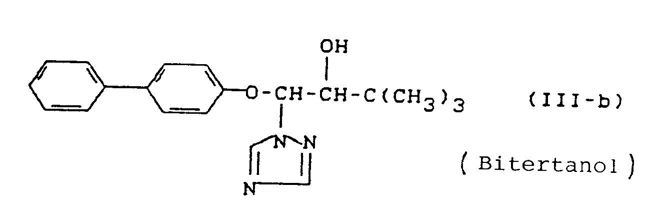

1-(4-Chlorphenoxy)-3,3-dimethyl-1-(1,2,4-triazol-1-yl)butan-2-on der Formel

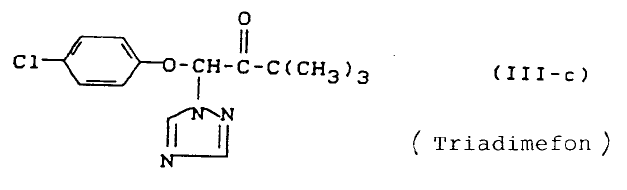

1-(4-Chlorphenyl)-2-(1,2,4-triazol-1-yl)-4,4-dimethylpent-1-en-3-ol der Formel

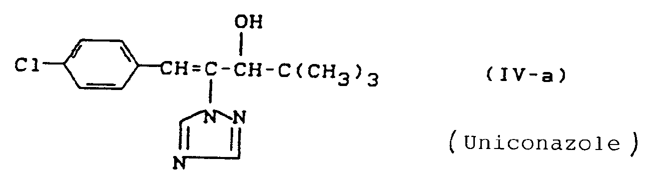

1-(2,4-Dichlorphenyl)-2-(1,2,4-triazol-1-yl)-4,4-dimethyl-,pent-1-en-3-ol der Formel

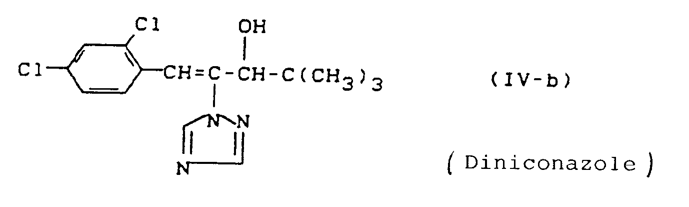

1-[(Bis-(4-fluorphenyl)-methyl silyl)-methyl]-1H-1,2,4-triazol der Formel

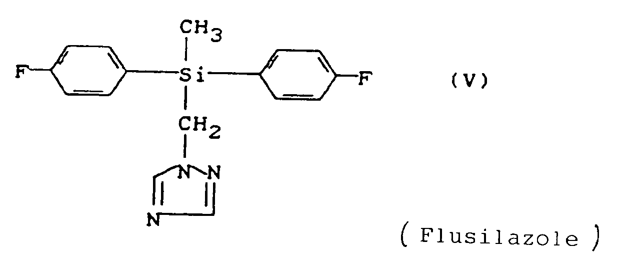

Die Wirkstoffe der Formeln (II) bis (V) sowie deren Verwendung zur Bekämpfung phytopathogener Pilze sind bekannt (vgl. EP-A 0 040 345, US-A 4 551 469, EP-B 0 015 756, EP-A 0 068 813, EP-A 0 297 345, DE-A 3 406 993, DE-C 2 324 010, DE-C 2 201 063, DE-A 2 838 847, DE-A 3 010 560 und DE-A 2 821 971).

Die Wirkstoffe der Formeln (II) bis (V) lassen sich in üblichen Formulierungen einsetzen. Vorzugsweise erfolgt die Ausbringung in Form von wäßrigen Spritzbrühen.

In den erfindungsgemäß verwendbaren Spritzbrühen können neben den Wirkstoffen der Formeln (II) bis (V) auch einer oder mehrere weitere Wirkstoffe enthalten sein. Vorzugsweise in Frage kommen dabei Verbindungen mit fungiziden Eigenschaften. Als Beispiele für derartige zusätzlich verwendbare Wirkstoffe seien genannt:
N,N-Dimethyl-N'-phenyl-(N'-fluordichlormethylthio)sulfamid (Dichlofluanid),
N,N-Dimethyl-(N'-fluordichlormethylthio)-N'-(4-methylphenyl)-sulfamid (Tolylfluanid),
N-Trichlormethylmercapto-4-cyclohexen-1,2-dicarboxamid (Captan),
N-(1,1,2,2-Tetrachlorethyl-sulfenyl)-cis-4-cyclohexen-1,2-dicarboxamid (Captafol),
N-Trichlormethylthio-phthalimid (Folpet),
N-Dodecyl-guanidin-acetat (Dodine),
Tetrachlor-isophthalo-dinitril (Chlorothalonil), 4,5,6,7-Tetrachlorphthalid,
Zink-ethylen-bis-dithiocarbamat (Zineb),
Mangan-ethylen-bis-dithiocarbamat (Maneb),
Zink-ethylen-bis-dithiocarbamat/Mangan-ethylen-bis-dithiocarbamat (Mancozeb),
Zink-propylen-1,2-bis-dithiocarbamat (Propineb),
1-[3-(4-(1,1-Dimethylethyl)-phenyl)-2-methylpropyl]-piperidin (Fenpropidin),
N-Tridecyl-2,6-dimethyl-morpholin (Tridemorph),
N-Dodecyl-2,6-dimethylmorpholin (Aldimorph),
2-[2-(2,4-Dichlorphenyl)-2-(2-propenyloxy)-ethyl]-imidazol (Imazalil),
N-[2-(2,4,6-Trichlorphenoxy)-ethyl]-N-propyl-1H-imidazol (Prochloraz),
1,2-Dimethyl-cyclopropan-1,2-dicarbonsäure-3,5-dichlorphenylimid (Procymidone),
2-Methoxycarbamoyl-benzimidazol (Carbendazim),
1-(Butylcarbamoyl)-2-benzimidazolmethylcarbamat (Benomyl),
2,4-Dichlor-6-(2'-chlorphenyl-amino)-1,3,4-triazin (Anilazine),
Bis-(8-Guanidin-O-octyl)-amin-triacetat (Guazatine),
1-(4-Chlorbenzyl)-1-cyclopentyl-3-phenyl-harnstoff (Pencycuron).

Als Zusatzstoffe, die in den erfindungsgemäß verwendbaren Spritzbrühen vorhanden sein können, kommen oberflächenaktive Stoffe, organische Verdünnungsmittel, Säuren, Kältestabilisatoren und Haftmittel in Frage.

Dabei kommen als oberflächenaktive Stoffe nichtionogene und anionische Emulgatoren, wie Polyoxyethylen-Fettsäure-Ester, Polyoxyethylen-Fettalkohol-Ether, Alkylaryl-polyglykol-Ether, Alkylsulfonate, Alkylsulfate und Arylsulfonate in Betracht. Dabei können die Emulgatoren einzeln oder auch in Mischung verwendet werden. Vorzugsweise genannt seien
Polyoxyethylen-Sorbitan-Monolaurat mit durchschnittlich 20 Oxyethylen-Einheiten pro Molekül,
Polyoxyethylen-Sorbitan-Monopalmitat mit durchschnittlich 20 Oxyethylen-Einheiten pro Molekül,
Polyoxyethylen-Sorbitan-Monostearat mit durchschnittlich 20 Oxyethylen-Einheiten pro Molekül,
Sorbitan-Monolaurat,
Sorbitan-Monopalmitat,
Sorbitan-Monostearat,
Polyoxyethylen-oleylether mit durchschnittlich 10 Oxyethylen-Einheiten pro Molekül,
Polyoxyethylen-oleylether mit durchschnittlich 20 Oxyethylen-Einheiten pro Molekül,
Bis-[α-methyl-(4-methyl-benzyl)]-phenyl-polyglykolether mit durchschnittlich 27 Oxyethylen-Einheiten pro Molekül,
Bis-[α-methyl-(4-n-dodecyl)]-phenyl-polyglykolether mit durchschnittlich 27 Oxyethylen-Einheiten pro Molekül,
Bis-(4-methyl-Benzyl)-phenyl-polyglykolether mit durchschnittlich 27 Oxyethylen-Einheiten pro Molekül,
Bis-(4-n-dodecyl-benzyl)-phenyl-polyglykolether mit durchschnittlich 27 Oxyethylen-Einheiten pro Molekül,
Tris-[α-methyl-(4-methyl-benzyl)1-phenyl-polyglykolether mit durchschnittlich 17 Oxyethylen-Einheiten pro Molekül,
Bis-(α-methyl-benzyl)-phenyl-polyglykolether mit durchschnittlich 17 Oxyethylen-Einheiten pro Molekül,
Tris-(α-methyl-benzyl)-phenyl-polyglykolether mit durchschnittlich 17 Oxyethylen-Einheiten pro Molekül,
Bis-(α-methyl-benzyl)-phenyl-polyglykolether mit durchschnittlich 27 Oxyethylen-Einheiten pro Molekül,
Tris(α-methyl-benzyl)-phenyl-polyglykolether mit durchschnittlich 27 Oxyethylen-Einheiten pro Molekül,
Bis-(α-methyl-benzyl)-phenyl-polyglykolether mit durchschnittlich 3 Oxyethylen-Einheiten pro Molekül,
Tris-(α-methyl-benzyl)-phenyl-polyglykolether mit durchschnittlich 3 Oxyethylen-Einheiten pro Molekül,
Nonylphenol-polyglykolether mit durchschnittlich 15 Oxyethylen-Einheiten pro Molekül,
Nonylphenol-diglykolether mit durchschnittlich 2 Oxyethylen-Einheiten pro Molekül,
n-Dodecyl-Natriumsulfonat,
Natrium-laurylsulfat,
4-(n-Nonyl)-phenyl-sulfonsäure-Natriumsalz,
4-(-Tetraropylen)-phenyl-sulfonsäure-Natriumsalz,
4-(i-Dodecyl)-phenyl-sulfonsäure-Ammoniumsalz,
4-(n-Dodecyl)-phenyl-sulfonsäure-(2-hydroxyethyl)ammoniumsalz,
4-(N-Dodecyl)-phenyl-sulfonsäure-bis-(2-hydroxyethyl)ammoniumsalz,
4-(n-Dodecyl)-phenyl-sulfonsäure-tris-(2-hydroxyethyl)ammoniumsalz,
4-(n-Dodecyl)-phenyl-sulfonsäure-Calciumsalz.

Die in der Praxis verwendeten Emulgatoren aus der Gruppe der Alkylaryl-polyglykol-Ether sind im allgemeinen Gemische aus mehreren Verbindungen. Insbesondere handelt es sich hierbei um Gemische aus Stoffen, die sich durch den Substitutionsgrad an dem mit der Oxyethylen-Einheit verbundenen Phenylring und die Zahl der Oxyethylen-Einheiten unterscheiden. Dadurch errechnen sich für die Zahl der Substituenten am Phenylring auch gebrochene Zahlen als Mittelwerte. Beispielsweise erwähnt seien Substanzen, für die sich folgende durchschnittliche Zusammensetzungen ergeben:

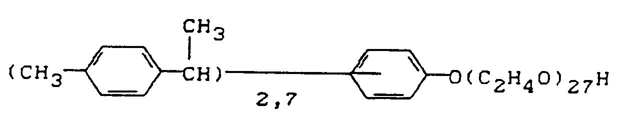

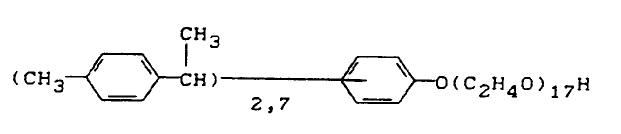

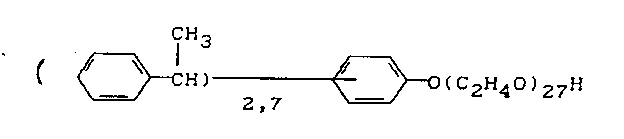

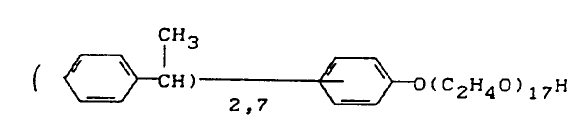

Als organische Verdünnungsmittel können in den erfindungsgemäß verwendbaren Spritzbrühen alle üblicherweise für derartige Zwecke einsetzbaren polaren und unpolaren organischen Solventien vorhanden sein. Vorzugsweise in Betracht kommen Ketone, wie Methyl-isobutyl-keton und Cyclohexanon, ferner Amide, wie Dimethylformamid und Nonancarbonsäure-dimethylamid, oder auch das unter dem Handelsnamen Hallcomid bekannte Gemisch, das durchschnittlich zu 5 % aus Hexancarbonsäure-dimethylamid, 50 % Octancarbonsäure-dimethylamid, 40 % Decancarbonsäure-dimethylamid und zu 5 % aus Dodecancarbonsäuredimethylamid besteht, weiterhin cyclische Verbindungen, wie N-Methyl-pyrrolidon, N-Octyl-pyrrolidon, N-Dodecylpyrrolidon, N-Dodecyl-caprolactam und Butyrolacton, darüberhinaus stark polare Solventien, wie Dimethylsulfoxid, ferner aromatische Kohlenwasserstoffe, wie Xylol, außerdem Ester, wie Propylenglykol-monomethylether-acetat, Adipinsäure-dibutylester, Essigsäurehexylester, Essigsäure-heptylester, Zitronensäure-tri-n-butylester und Phthalsäure-di-n-butylester, und weiterhin Alkohole, wie Ethanol, n- und i-Propanol, n- und i-Butanol, n- und i-Amylalkohol, Benzylalkohol und 1-Methoxy-2-propanol.

Als Säuren können in den erfindungsgemäß verwendbaren Spritzbrühen alle üblicherweise für derartige Zwecke einsetzbaren anorganischen und organischen Säuren vorhanden sein. Vorzugsweise in Frage kommen aliphatische und aromatische Hydroxycarbonsäuren, wie Citronensäure, Salicylsäure, Weinsäure und Ascorbinsäure.

Als Kältestabilisatoren können in den erfindungsgemäß verwendbaren Spritzbrühen alle üblicherweise für diesen Zweck geeigneten Stoffe enthalten sein. Vorzugsweise in Frage kommen Harnstoff, Glycerin und Propylenglykol. Als Haftmittel können in den erfindungsgemäß verwendbaren Spritzbrühen alle üblicherweise für diesen Zweck geeigneten Stoffe eingesetzt werden. Vorzugsweise in Betracht kommen Haftmittel wie Carboxymethylcellulose, natürliche und synthetische pulverige, körnige oder latexförmige Polymere, wie Gummi arabicum, Polyvinylalkohol, Polyvinylacetat, sowie natürliche Phospholipide, wie Kephaline und Lecithine, und auch synthetische Phospholipide. Weitere Additive können mineralische und vegetabile Öle sein.

Im übrigen ist in den erfindungsgemäß verwendbaren Spritzbrühen jeweils Wasser enthalten.

Bei der erfindungsgemäßen Verwendung von Kupfersalzen der Formel (I) können eines oder auch mehrere dieser Kupfersalze in den Spritzbrühen eingesetzt werden.

Die Wirkstoffkonzentrationen können in den erfindungsgemäß verwendbaren Spritzbrühen innerhalb eines bestimmten Bereiches variiert werden. Im allgemeinen liegen die Wirkstoffkonzentrationen zwischen 0,0001 und 3 Gewichtsprozent, vorzugsweise zwischen 0,05 und 2-Gewichtsprozent.

Auch das Verhältnis von Wirkstoff der Formeln (II) bis (V) zu Kupfersalz der Formel (I) kann innerhalb eines bestimmten Bereiches variiert werden. Im allgemeinen liegt das Gewichtsverhältnis von Wirkstoff aus der Gruppe (A) zu Kupfersalz der Formel (I) zwischen 1:0,01 und 1:1, vorzugsweise zwischen 1:0,02 und 1:0,5.

Die Mengen an weiteren Wirkstoffen bzw. Zusatzstoffen können in den erfindungsgemäß verwendbaren Spritzbrühen innerhalb eines größeren Bereiches variiert werden. Sie liegen in der Größenordnung wie es üblicherweise in derartigen wäßrigen Spritzbrühen der Fall ist.

Die Herstellung der erfindungsgemäß verwendbaren Spritzbrühen erfolgt nach üblichen Methoden. Im allgemeinen geht man so vor, daß man zunächst ein Konzentrat herstellt, indem man bei Temperaturen zwischen 10 und 30°C die benötigten Komponenten in beliebiger Reihenfolge zusammengibt und homogen vermischt und das entstehende Gemisch gegebenenfalls filtriert. Zur Herstellung der anwendungsfertigen Spritzbrühen wird die konzentrierte Formulierung gegebenenfalls unter Rühren und/oder Pumpen mit der jeweils gewünschten Menge an Wasser so vermischt, daß die Formulierung in Wasser gleichmäßig und feindispers verteilt wird. Es ist auch möglich, eines oder mehrere Kupfersalze mit Wasser zu vermischen und dann eine vorbereitete Wirkstoff-Formulierung hinzugeben.

Sowohl zur Zubereitung der konzentrierten Formulierungen als auch zur Herstellung und Ausbringung der erfindungsgemäß verwendbaren Spritzbrühen lassen sich alle üblicherweise für diese Zwecke geeigneten Mischapparate und Spritzgeräte einsetzen.

Durch die Verwendung von einem oder mehreren Kupfersalzen der Formel (I) in wäßrigen Spritzbrühen auf Basis von Wirkstoffen der Formeln (II) bis (V) wird die Auskristallisation von Wirkstoff sowohl in der konzentrierten, handelsüblichen Formulierung als auch beim Ausbringen der daraus hergestellten wäßrigen Spritzbrühen in den Filtern und Austrittsöffnungen der Spritzgeräte entweder ganz unterbunden oder soweit verhindert, daß die Ausbringung der Spritzbrühen nicht beeinträchtigt ist.

Die Herstellung und das Kristallisationsverhalten der erfindungsgemäß verwendbaren Spritzbrühen werden durch die folgenden Beispiele veranschaulicht.

### Herstellungsbeispiele

### Beispiel 1

Zur Herstellung einer Formulierung werden
22,5 Gew.-Teile 1-(4-Chlorphenyl)-4,4-dimethyl-3(1,2,4-triazol-1-yl-methyl)-pentan-3-ol der Formel 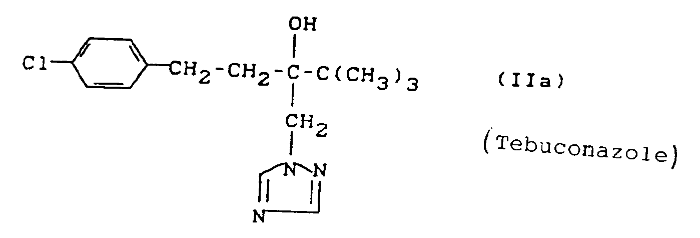
15,0 Gew.-Teile des Emulgators der durchschnittlichen Zusammensetzung der Formel 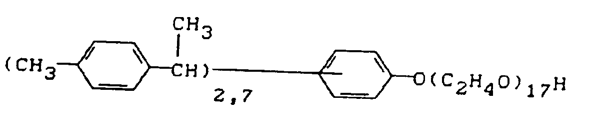
5,0 Gew.-Teile des Emulgators der durchschnittlichen Zusammensetzung der Formel 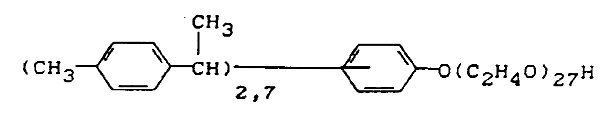
6,6 Gew.-Teile Kupfersalicylat,
4,9 Gew.-Teile Citronensäure,
10,0 Gew.-Teile Adipinsäure-di-butyl-ester und
36,0 Gew.-Teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Beispiel 2

Zur Herstellung einer Formulierung werden
23,3 Gew.-Teile 1-(4-Chlorphenyl)-4,4-dimethyl-3-(1,2,4-triazol-1-yl-methyl)-pentan-3-ol der Formel 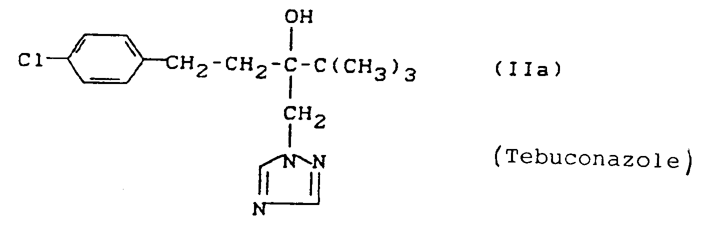
10,0 Gew.-Teile des Emulgators der durchschnittlichen Zusammensetzung der Formel 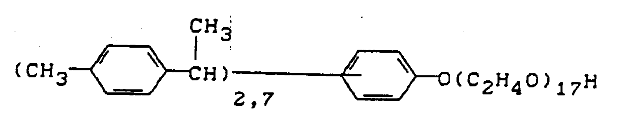
10,0 Gew.-Teile 4-(n-Dodecyl)-phenyl-sulfonsäure-(2-hydroxyethyl)-ammoniumsalz,
10,0 Gew,-Teile des Emulgators der Zusammensetzung der Formel 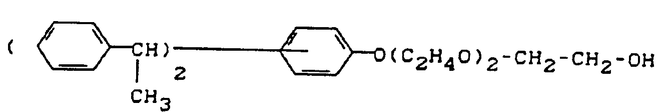
10,0 Gew.-Teile Kupfer-4-(n-dodecyl)-benzol-sulfonat,
5,0 Gew.-Teile N-Octyl-pyrrolidon und
32,0 Gew.-Teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew,-% enthalten ist.

### Beispiel 3

Zur Herstellung einer Formulierung werden
23,D Gew.-Teile 1-(4-Chlorphenyl)-4,4-dimethyl-3-(1,2,4-triazol-1-yl-methyl)-pentan-3-ol der Formel 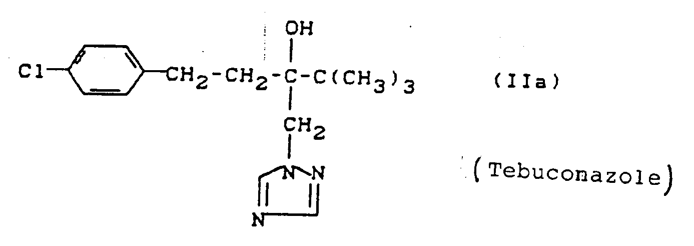
15,0 Gew.-Teile des Emulgators der durchschnittlichen Zusammensetzung der Formel 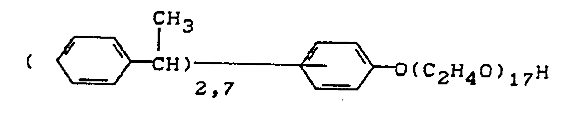
5,0 Gew.-Teile des Emulgators der durchschnittlichen Zusammensetzung der Formel 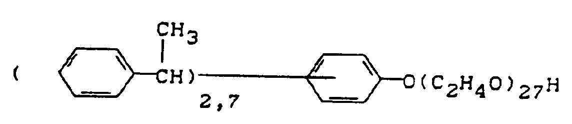
8,0 Gew.-Teile Kupfer-naphthenat,
4,9 Gew.-Teile Citronensäure und
44,0 Gew.-Teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Beispiel 4

Zur Herstellung einer Formulierung werden
22,3 Gew.-Teile 1-(4-Chlorphenyl)-4,4-dimethyl-3-(1,2,4-triazol-1-yl-methyl)-pentan-3-ol der Formel 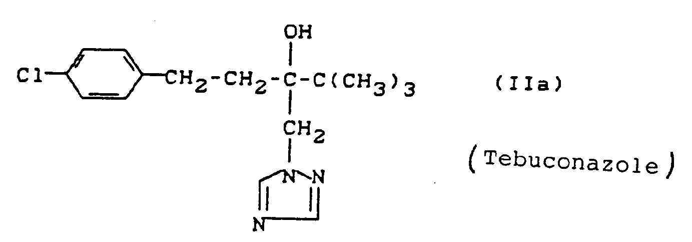
11,2 Gew,-Teile 1-(4-Chlorphenoxy)-3,3-dimethyl-1-(1,2,4-triazol-1-yl)-butan-2-ol der Formel 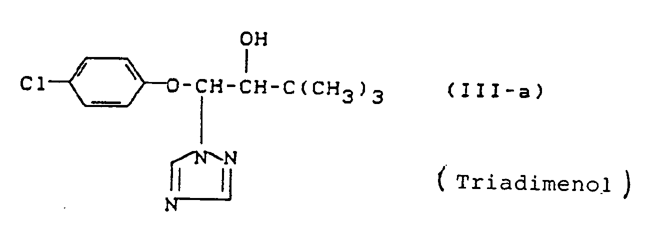
15,0 Gew.-Teile des Emulgators der durchschnittlichen Zusammensetzung der Formel 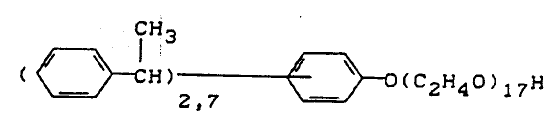
5,0 Gew.-Teile des Emulgators der durchschnittlichen Zusammensetzung der Formel 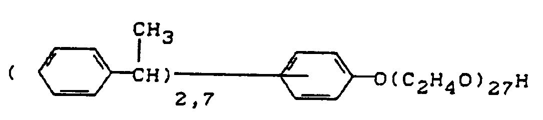
5,3 Gew.-Teile Kupfer-salicylat,
3,9 Gew.-Teile Citronensäure,
10,0 Gew.-Teile Adipinsäure-di-butylester und
25,0 Gew.-teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Beispiel 5

Zur Herstellung einer Formulierung werden
22,7 Gew.-Teile 1-(4-Chlorphenyl)-4,4-dimethyl-3-(1,2,4-triazol-1-yl-methyl)-pentan-3-ol der Formel 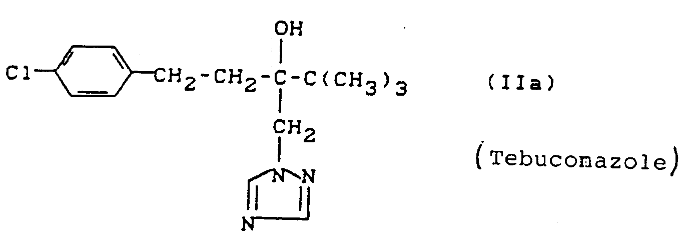
11,4 Gew.-Teile 1-(4-Chlorphenoxy)-3,3-dimethyl-1(1,2,4-triazol-1-yl)-butan-2-ol der Formel 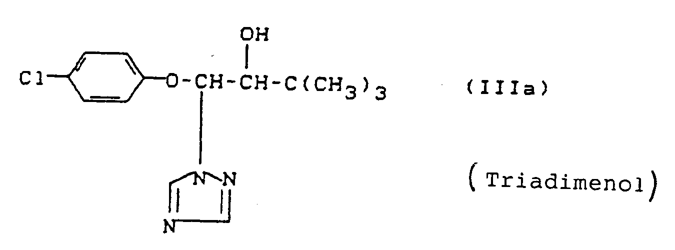
4,0 Gew.-Teile des Emulgators der durchschnittlichen Zusammensetzung der Formel 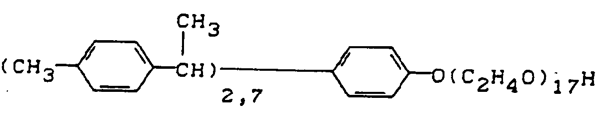
4,0 Gew.-Teile 4-(n-Dodecyl)-phenyl-sulfonsäure-(2-hydroxyethyl)-ammoniumsalz,
8,0 Gew.-Teile Nonylphenol-polyglykolether mit durchschnittlich 15 Oxyethylen-Einheiten pro Molekül,
4,0 Gew,-Teile des Emulgators der durchschnittlichen Zusammensetzung der Formel 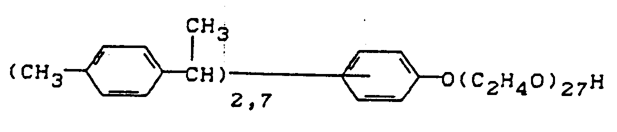
10,0 Gew.-Teile des Emulgators der Zusammensetzung der Formel 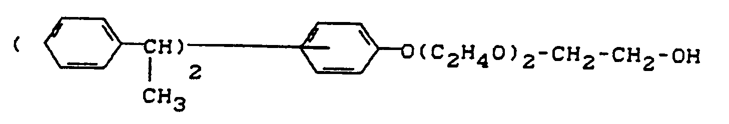
10,0 Gew.-Teile Kupfer-4-(n-dodecyl)-benzol-sulfonat und
25,0 Gew.-Teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% enthalten ist.

### Beispiel 6

Zur Herstellung einer Formulierung werden
12,5 Gew.-Teile 1-(2-Chlorphenyl)-2-(1-chlor-cycloprop-1-yl)-3-(1,2,4-triazol-1-yl)-propan-2-ol der Formel 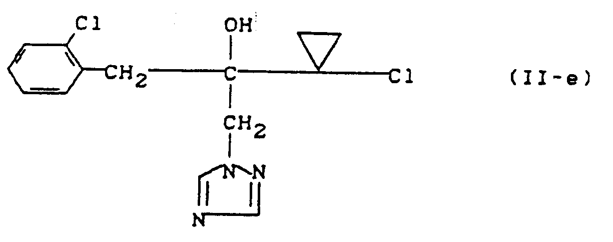
15,0 Gew.-Teile des Emulgators der durchschnittlichen Zusammensetzung der Formel 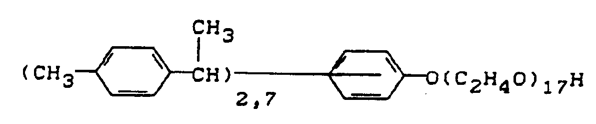
5,0 Gew.-Teile des Emulgators der durchschnittlichen Zusammensetzung der Formel 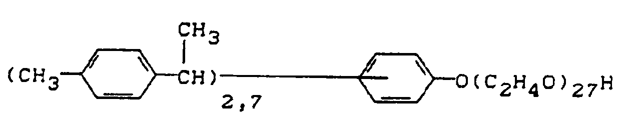
5,3 Gew.-Teile Kupfer-salicylat,
3,9 Gew.-Teile Citronensäure und
58,0 Gew.-Teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-% erhalten ist.

### Beispiel 7

Zur Herstellung einer Formulierung werden
25,0 Gew.-Teile 1-(4-Chlorphenyl)-4,4-dimethyl-3-(1,2,4-triazol-1-yl-methyl)-pentan-3-ol der Formel 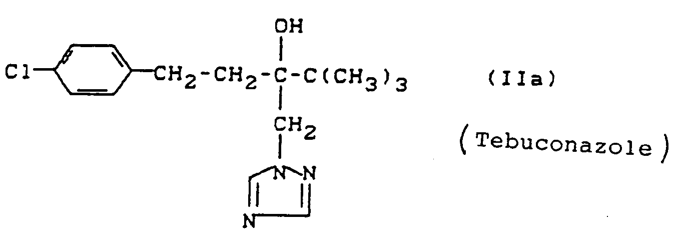
25,0 Gew.-Teile Cyclohexanon,
22,5 Gew.-Teile N-Octyl-pyrrolidon,
6,5 Gew,-Teile des Emulgators der durchschnittlichen Zusammensetzung der Formel 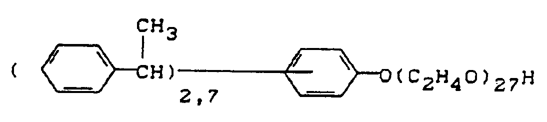
6,5 Gew.-Teile 4-(n-Dodecyl)-phenyl-sulfonsäure-(2-hydroxyethyl)-ammoniumsalz,
1,0 Gew.-Teile Kupfer(II)chlorid-dihydrat
und
13,0 Gew.-Teile Wasser
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew,-%, enthalten ist.

### Vergleichsbeispiel A

Zur Herstellung einer Formulierung werden
23,8 Gew.-Teile 1-(4-Chlorphenyl)-4,4-dimethyl-3-(1,2,4-triazol-1-yl-methyl)-pentan-3-ol der Formel 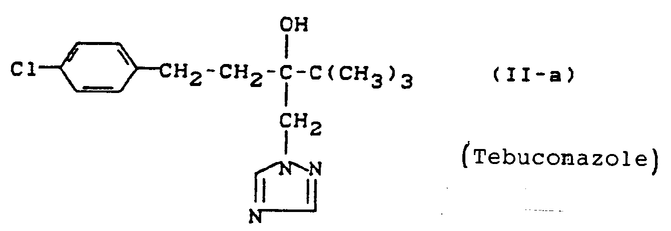
5,0 Gew.-Teile des Emulgators der durchschnittlichen Zusammensetzung der Formel 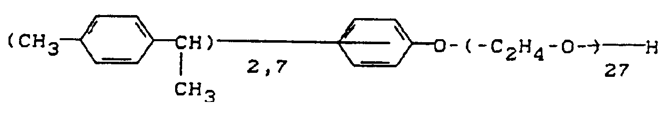
15,0 Gew.-Teile des Emulgators der durchschnittlichen Zusammensetzung der Formel 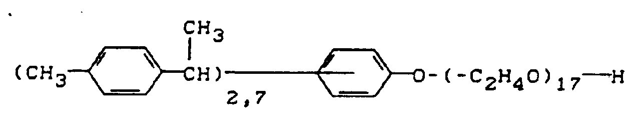
20,0 Gew.-Teile des Emulgators der Formel 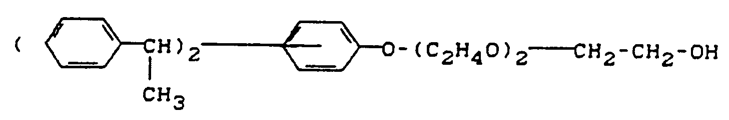
und
36,2 Gew.-Teile N,N-Dimethylformamid bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 0,5 Gew.-%, enthalten ist.

### Verwendungsbeispiel I

Zur Prüfung der Kristallisationseigenschaften werden jeweils 250 ml einer wäßrigen Spritzbrühe, die einen Konzentratgehalt von 0,5 Gew.-% aufweist, in einer Durchflußapparatur mit Hilfe einer Pumpe 15 Minuten lang durch ein feinmaschiges Sieb umgepumpt. Nach achtmaliger Wiederholung dieses Vorganges mit jeweils 250 ml frisch eingesetzter Spritzbrühe wird die Kristallabscheidung an dem Sieb photographiert.

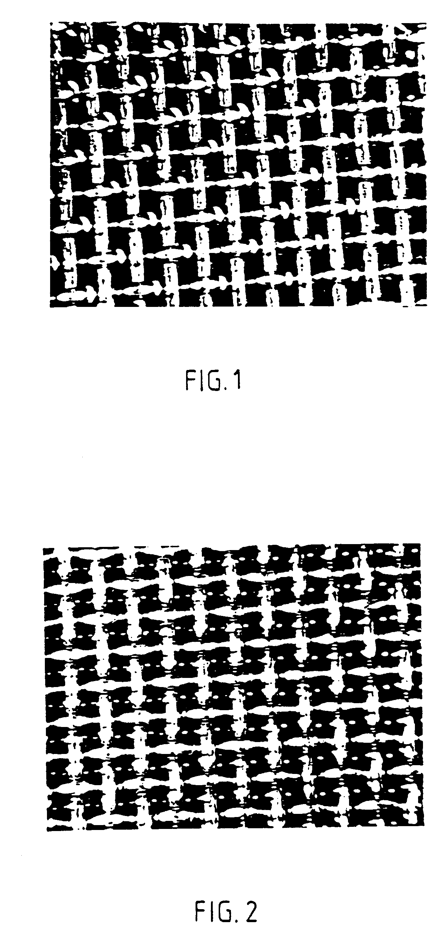

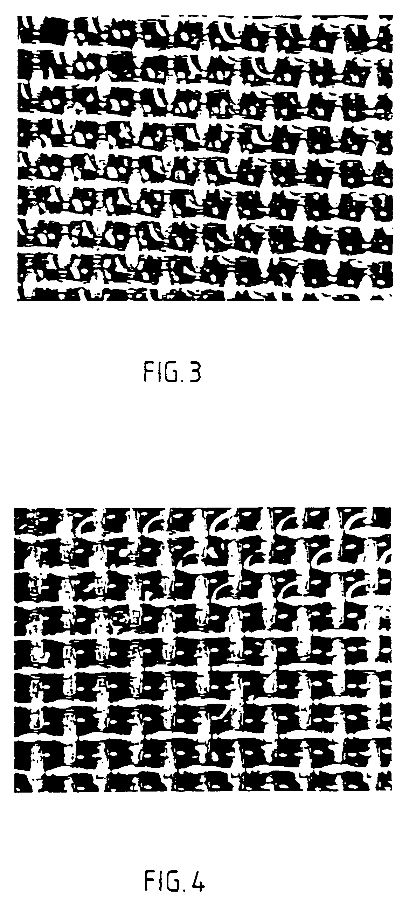

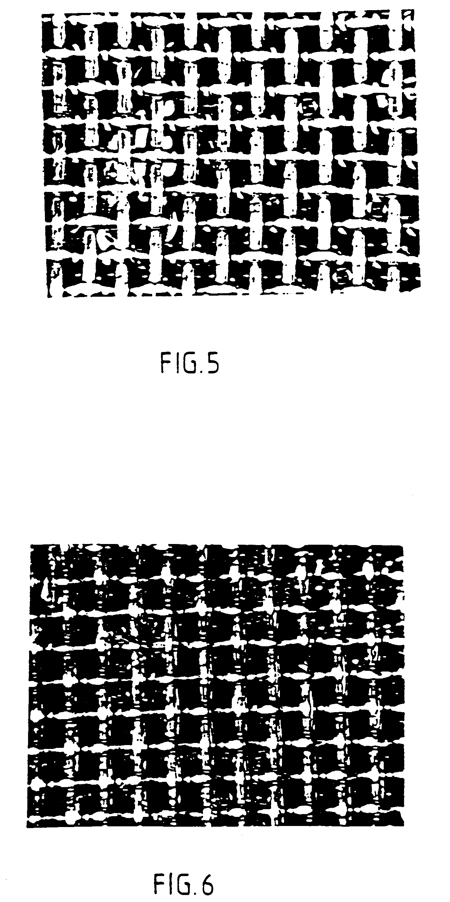

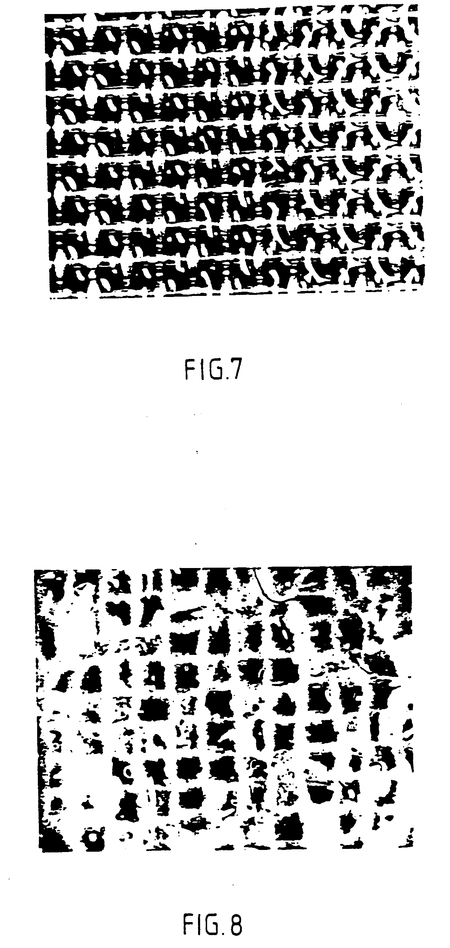

Die entsprechenden Photographien sind in den Abbildungen 1 bis 8 (Fig. 1 bis 8) wiedergegeben.

Fig. 1 zeigt in 25-facher Vergrößerung die Kristallabscheidung, die beim Durchpumpen von acht 250 ml Ansätzen der Kupfersalicylat enthaltenden Spritzbrühe gemäß Beispiel (1) am Sieb entsteht.

Fig. 2 zeigt in 25-facher Vergrößerung die Kristallabscheidung, die beim Durchpumpen von acht 250 ml Ansätzen der Kupfer-4-(n-dodecyl)-benzol-sulfonat enthaltenden Spritzbrühe gemäß Beispiel (2) am Sieb entsteht.

Fig. 3 zeigt in 25-facher Vergrößerung die Kristallabscheidung, die beim Durchpumpen von acht 250 ml Ansätzen der Kupfer-naphthenat enthaltenden Spritzbrühe gemäß Beispiel (3) am Sieb entsteht.

Fig. 4 zeigt in 25-facher Vergrößerung die Kristallabscheidung, die beim Durchpumpen von acht 250 ml Ansätzen der Kupfersalicylat enthaltenden Spritzbrühe gemäß Beispiel (4) am Sieb entsteht.

Fig. 5 zeigt in 25-facher Vergrößerung die Kristallabscheidung, die beim Durchpumpen von acht 250 ml Ansätzen der Kupfer-4-(n-dodecyl)-benzol-sulfonat enthaltenden Spritzbrühe gemäß Beispiel (5) am Sieb entsteht.

Fig. 6 zeigt in 25-facher Vergrößerung die Kristallabscheidung, die beim Durchpumpen von acht 250 ml Ansätzen der Kupfersalicylat enthaltenden Spritzbrühe gemäß Beispiel (6) am Sieb entsteht.

Fig. 7 zeigt in 25-facher Vergrößerung die Kristallabscheidung, die beim Durchpumpen von acht 250 ml Ansätzen der Kupfer(II)chlorid-dihydrat enthaltenden Spritzbrühe gemäß Beispiel (7) am Sieb entsteht.

Fig. 8 zeigt in 25-facher Vergrößerung die Kristallabscheidung, die beim Durchpumpen von acht 250 ml Ansätzen der kein Kupfersalz enthaltenden Spritzbrühe gemäß Beispiel (A) am Sieb entsteht.

Aus den Abbildungen ist erkennbar, daß das Sieb im Falle der bekannten Spritzbrühe gemäß Beispiel (A) teilweise verstopft, während im Falle der Spritzbrühen gemäß Beispielen (1) bis (7) keine Kristallabscheidung beobachtet wird.

## Patentansprüche

1. Verwendung von Kupfer(I)- bzw. Kupfer(II)-Salzen der Formel
CuₘXₙ (I)
in welcher
X für Halogenid, Rhodanid, Sulfat, Alkylsulfonat, Alkylarylsulfonat oder für einen Rest der Formel
R-COO^{⊖}
steht, worin
R für gegebenenfalls durch Halogen, Cycloalkyl oder Hydroxy substituiertes Alkyl, gegebenenfalls durch Halogen, Cycloalkyl oder Hydroxy substituiertes Alkenyl, gegebenenfalls durch Halogen, Alkyl, Cycloalkyl oder Hydroxy substituiertes Cycloalkyl oder gegebenenfalls durch Halogen, Alkyl, Cycloalkyl oder Hydroxy substituiertes Cycloalkenyl steht, oder für gegebenenfalls durch Halogen, Amino, Hydroxy und/oder Acetyloxy substituiertes Phenyl oder Naphthyl steht,
oder
X für ein Anion einer aliphatischen oder aromatischen Dicarbonsäure, ein Anion einer aliphatischen Hydroxydicarbonsäure, ein Anion einer aliphatischen Hydroxy-tricarbonsäure, ein Anion der Abietinsäure oder für ein Anion steht, das sich von einer gegebenenfalls substituierten 1,3-Dicarbonyl-Verbindung, von Saccharin oder von der Ascorbinsäure ableitet,
m für 1, 2 oder 3 steht und
n für 1 oder 2 steht,
beim Ausbringen von wäßrigen Spritzbrühen, die
A) mindestens ein Azol-Derivat der Formel 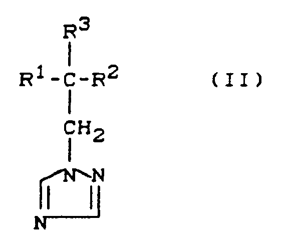
a)
R¹ für 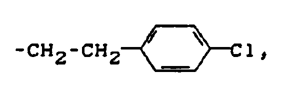
R² für tert.-Butyl steht und
R³ für Hydroxy steht,
oder
b)
R¹ für 4-Fluorphenyl steht,
R² für 2-Fluorphenyl steht und
R³ für Hydroxy steht,
oder
c)
R¹ für 2,4-Dichlorphenyl steht,
R² für n-Butyl steht und
R³ für Hydroxy steht,
oder
d)
R¹ für 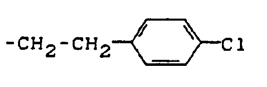 steht,
R² für Phenyl steht und
R³ für Cyano steht,
oder
e)
R¹ für 2-Chlor-benzyl steht,
R² für 1-Chlor-cycloprop-1-yl steht
und
R³ für Hydroxy steht,
oder
f)
R¹ für 4-Chlorphenyl steht,
R² für 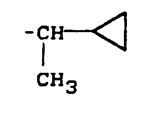 steht und
R³ für Hydroxy steht,
und/oder
mindestens ein Azol-Derivat der Formel 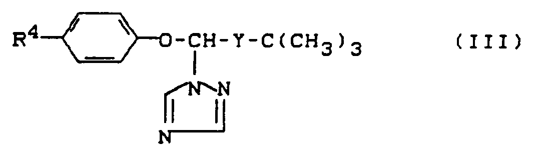 in welcher
a)
Y für -CH(OH) steht und
R⁴ für Chlor oder Phenyl steht,
oder
b)
Y für CO steht und
R⁴ für Chlor steht,
und/oder
mindestens ein Azol-Derivat der Formel 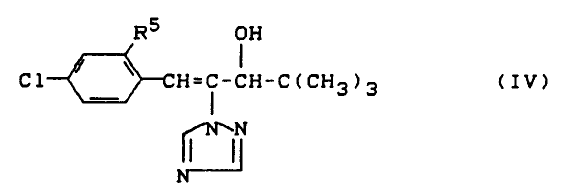 in welcher
R⁵ für Wasserstoff oder Chlor steht,
und/oder 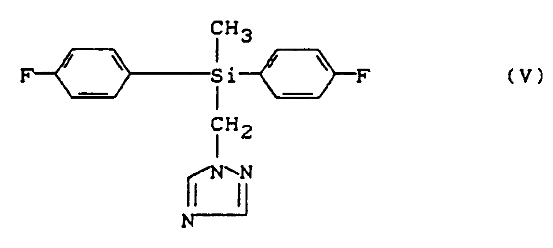 und
B) gegebenenfalls einen oder mehrere weitere Wirkstoffe sowie Zusatzstoffe
enthalten, zur Verhinderung der Kristallisation von Wirkstoffen der Formeln (II) bis (V).

2. Verwendung gemäß Anspruch 1, dadurch gekennzeichnet, daß man Kupfersalze der Formel (I) einsetzt, in welcher
X für Chlor, Bromid, Iodid, Rhodanid, Sulfat, Alkylsulfonat mit 1 bis 4 Kohlenstoffatomen, Alkyl-benzol-sulfonat mit 1 bis 14 Kohlenstoffatomen im Alkylteil oder für einen Rest der Formel
R-COO^{⊖}
steht, worin
R für gegebenenfalls einfach oder mehrfach durch Fluor und/oder Chlor substituiertes Alkyl mit 1 bis 18 Kohlenstoffatomen, gegebenenfalls einfach oder mehrfach durch Hydroxy oder Cycloalkyl mit 3 bis 7 Kohlenstoffatomen substituiertes Alkyl mit 1 bis 18 Kohlenstoffatomen, gegebenenfalls einfach oder mehrfach durch Fluor und/oder Chlor substituiertes Alkenyl mit 3 bis 18 Kohlenstoffatomen, gegebenenfalls durch Hydroxy oder Cycloalkyl mit 3 bis 7 Kohlenstoffatomen substituiertes Alkenyl mit 3 bis 18 Kohlenstoffatomen, gegebenenfalls einfach oder mehrfach durch Fluor und/oder Chlor substituiertes Cycloalkyl mit 3 bis 8 Kohlenstoffatomen, gegebenenfalls durch Hydroxy, Alkyl mit 1 bis 4 Kohlenstoffatomen oder Cycloalkyl mit 3 bis 7 Kohlenstoffatomen substituiertes Cycloalkyl mit 3 bis 8 Kohlenatomen, gegebenenfalls einfach oder mehrfach durch Fluor und/oder Chlor substituiertes Cycloalkenyl mit 5 bis 8 Kohlenstoffatomen, gegebenenfalls durch Hydroxy, Alkyl mit 1 bis 4 Kohlenstoffatomen oder Cycloalkyl mit 3 bis 7 Kohlenstoffatomen substituiertes Cycloalkenyl mit 5 bis 8 Kohlenstoffatomen, gegebenenfalls einfach bis dreifach, gleichartig oder verschieden durch Fluor, Chlor, Brom, Amino, Hydroxy und/oder Acetyloxy substituiertes Phenyl oder Naphthyl steht,
oder
X für ein Anion einer aliphatischen Dicarbonsäure mit 2 bis 8 Kohlenstoffatomen, für ein Anion einer Benzoldicarbonsäure, für ein Anion einer aliphatischen Hydroxydicarbonsäure und 3 bis 8 Kohlenstoffatomen und 1 bis 3 Hydroxygruppen, für ein Anion einer aliphatischen Hydroxy-tricarbonsäure mit 4 bis 8 Kohlenstoffatomen und 1 bis 3 Hydroxygruppen, ein Anion der Abietinsäure oder für ein Anion steht, das sich von einer gegebenenfalls durch Alkoxy-Gruppen substituierten aliphatischen 1,3-Dicarbonyl-Verbindung mit 5 bis 10 Kohlenstoff atomen, von Saccharin oder von der Ascorbinsäure ableitet,
m für 1, 2 oder 3 steht und
n für 1 oder 2 steht.

3. Verwendung gemäß Anspruch 1, dadurch gekennzeichnet, daß man Kupfer-salicylat einsetzt.

4. Verwendung gemäß Anspruch 1, dadurch gekennzeichnet, daß man Kupfer-4-(n-dodecyl)-benzol-sulfonat einsetzt.

5. Verwendung gemäß Anspruch 1, dadurch gekennzeichnet, daß man Kupfer-naphthenat einsetzt.

6. Verwendung gemäß Anspruch 1, dadurch gekennzeichnet, daß man Kupfer(II)chlorid einsetzt.

7. Verfahren zur Verhinderung der Kristallisation von Wirkstoffen der Formeln (II) bis (V) gemäß Anspruch 1 beim Ausbringen von wäßrigen Spritzbrühen, die mindestens einen Wirkstoff der Formeln (II) bis (V) enthalten, dadurch gekennzeichnet, daß man den Spritzbrühen mindestens ein Kupfersalz der Formel (I) gemäß Anspruch 1 zusetzt.

## Claims

1. Use of copper(I) or copper(II) salts of the formula
CuₘXₙ (I)
in which
X represents halide, thiocyanate, sulphate, alkylsulphonate, alkylarylsulphonate or a radical of the formula
R-COO^{⊖}
in which
R represents alkyl which is optionally substituted by halogen, cycloalkyl or hydroxyl, alkenyl which is optionally substituted by halogen, cycloalkyl or hydroxyl, cycloalkyl which is optionally substituted by halogen, alkyl, cycloalkyl or hydroxyl, or cycloalkenyl which is optionally substituted by halogen, alkyl, cycloalkyl or hydroxyl, or represents phenyl or naphthyl, each of which is optionally substituted by halogen, amino, hydroxyl and/or acetoxy,
or
X represents an anion of an aliphatic or aromatic dicarboxylic acid, an anion of an aliphatic hydroxydicarboxylic acid, an anion of an aliphatic hydroxy-tricarboxylic acid, an anion of abietic acid or an anion which is derived from an optionally substituted 1,3-dicarbonyl compound, from saccharin or from ascorbic acid,
m represents 1, 2 or 3 and
n represents 1 or 2,
in the application of aqueous spray liquors which contain
A) at least one azole derivative of the formula 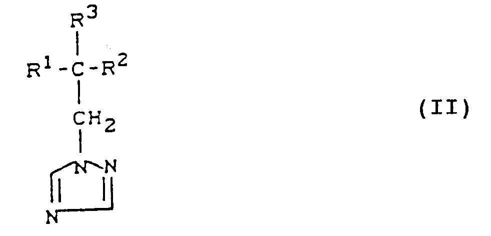 in which
a)
R¹ represents 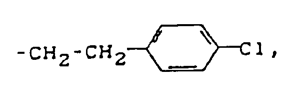
R² represents tert-butyl and
R³ represents hydroxyl,
or
b)
R¹ represents 4-fluorophenyl,
R² represents 2-fluorophenyl and
R³ represents hydroxyl,
or
c)
R¹ represents 2,4-dichlorophenyl,
R² represents n-butyl and
R³ represents hydroxyl,
or
d)
R¹ represents 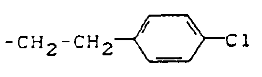
R² represents phenyl and
R³ represents cyano,
or
e)
R¹ represents 2-chloro-benzyl,
R² represents 1-chloro-cycloprop-1-yl and
R³ represents hydroxyl,
or
f)
R¹ represents 4-chlorophenyl,
R² represents 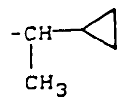 and
R³ represents hydroxyl,
and/or
at least one azole derivative of the formula 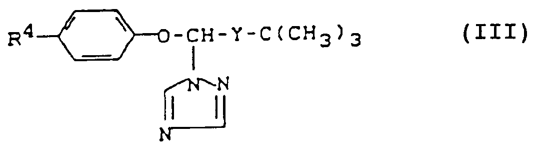 in which
a)
Y represents -CH(OH) and
R⁴ represents chlorine or phenyl,
or
b)
Y represents CO and
R⁴ represents chlorine,
and/or
at least one azole derivative of the formula 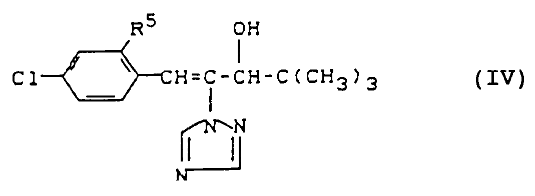 in which
R⁵ represents hydrogen or chlorine,
and/or 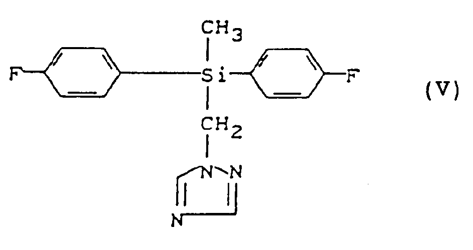 and
B) optionally one or more further active compounds and additives,
for preventing the crystallisation of active compounds of the formulae (II) to (V).

2. Use according to Claim 1, characterised in that copper salts of the formula (I) are employed in which
X represents chlorine, bromide, iodide, thiocyanate, sulphate, alkylsulphonate having 1 to 4 carbon atoms, alkyl-benzene-sulphonate having 1 to 14 carbon atoms in the alkyl moiety or a radical of the formula
R-COO^{⊖}
in which
R represents alkyl having 1 to 18 carbon atoms, which is optionally monosubstituted or polysubstituted by fluorine, and/or chlorine, alkyl having 1 to 18 carbon atoms, which is optionally substituted by hydroxyl or cycloalkyl having 3 to 7 carbon atoms, alkenyl having 3 to 18 carbon atoms, which is optionally monosubstituted or polysubstituted by fluorine and/or chlorine, alkenyl having 3 to 18 carbon atoms, which is optionally substituted by hydroxyl or cycloalkyl having 3 to 7 carbon atoms, cycloalkyl having 3 to 8 carbon atoms, which is optionally monosubstituted or polysubstituted by fluorine and/or chlorine, cycloalkyl having 3 to 8 carbon atoms, which is optionally substituted by hydroxyl, alkyl having 1 to 4 carbon atoms or cycloalkyl having 3 to 7 carbon atoms, cycloalkenyl having 5 to 8 carbon atoms, which is optionally monosubstituted or polysubstituted by fluorine and/or chlorine, cycloalkenyl having 5 to 8 carbon atoms, which is optionally substituted by hydroxyl, alkyl having 1 to 4 carbon atoms or cycloalkyl having 3 to 7 carbon atoms, or phenyl or naphthyl, each of which is optionally monosubstituted to trisubstituted by identical or different fluorine, chlorine, bromine, amino, hydroxyl and/or acetoxy substituents,
or
X represents an anion of an aliphatic dicarboxylic acid having 2 to 8 carbon atoms, an anion of a benzenedicarboxylic acid, an anion of an aliphatic hydroxydicarboxylic acid having 3 to 8 carbon atoms and 1 to 3 hydroxyl groups, an anion of an aliphatic hydroxy-tricarboxylic acid having 4 to 8 carbon atoms and 1 to 3 hydroxyl groups, an anion of abietic acid or an anion which is derived from a 1,3-dicarbonyl compound having 5 to 10 carbon atoms, which is optionally substituted by alkoxy groups, from saccharin or from ascorbic acid,
m represents 1, 2 or 3 and
n represents 1 or 2.

3. Use according to Claim 1, characterised in that copper salicylate is employed.

4. Use according to Claim 1, characterised in that copper 4-(n-dodecyl)-benzene-sulphonate is employed.

5. Use according to Claim 1, characterised in that copper naphthenate is employed.

6. Use according to Claim 1, characterised in that copper(II) chloride is employed.

7. Process for preventing the crystallisation of active compounds of the formulae (II) to (V) according to Claim 1 in the application of aqueous spray liquors which contain at least one active compound of the formulae (II) to (V), characterised in that at least one copper salt of the formula (I) according to Claim 1 is added to the spray liquors.

## Revendications

1. Utilisation de sels cuivreux ou cuivriques de formule
CuₘXₙ (I)
dans laquelle
X représente un anion halogénure, thiocyanate, sulfate, alkylsulfonate, alkylarylsulfonate ou un radical de formule
R-COO^{⊖}
dans laquelle
R représente un groupe alkyle éventuellement substitué par des halogènes, des groupes cycloalkyle ou hydroxy, un groupe alcényle éventuellement substitué par des halogènes, des groupes cycloalkyle ou hydroxy, un groupe cycloalkyle éventuellement substitué par des halogènes, des groupes alkyle, cycloalkyle ou hydroxy, un groupe cycloalcényle éventuellement substitué par des halogènes, des groupes alkyle, cycloalkyle ou hydroxy, ou un groupe phényle ou naphtyle éventuellement substitué par des halogènes, des groupes amino, hydroxy et/ou acétyloxy,
ou bien
X représente un anion d'un acide dicarboxylique aliphatique ou aromatique, un anion d'un acide hydroxydicarboxylique aliphatique, un anion d'un acide tricarboxylique aliphatique, un anion de l'acide abiétique ou un anion dérivant d'un composé 1,3-dicarbonylé éventuellement substitué, de la saccharide ou de l'acide ascorbique,
m est égal à 1, 2 ou 3, et
n est égal à 1 ou 2,
à l'application de bouillies aqueuses de pulvérisation contenant
A) au moins un dérivé azolique de formule 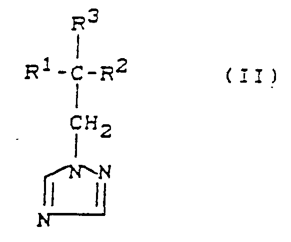 dans laquelle
a)
R¹ représente 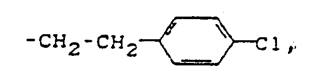
R² représente un groupe tert-butyle et
R³ représente un groupe hydroxy,
ou bien
b)
R¹ représente un groupe 4-fluorophényle,
R² représente un groupe 2-fluorophényle, et
R³ représente un groupe hydroxy,
ou bien
c)
R¹ représente un groupe 2,4-dichlorophényle,
R² représente un groupe n-butyle, et
R³ représente un groupe hydroxy,
ou bien
d)
R¹ représente un groupe 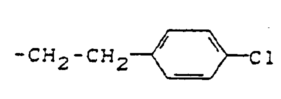
R² représente un groupe phényle, et
R³ représente un groupe cyano,
ou bien
e)
R¹ représente un groupe 2-chlorobenzyle,
R² représente un groupe 1-chlorocyclopropa-1-yle, et
R³ représente un groupe hydroxy,
ou bien
f)
R¹ représente un groupe 4-chlorophényle,
R² représente 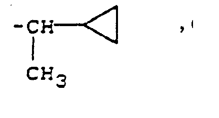 et
R³ représente un groupe hydroxy, et/ou
au moins un dérivé azolique de formule 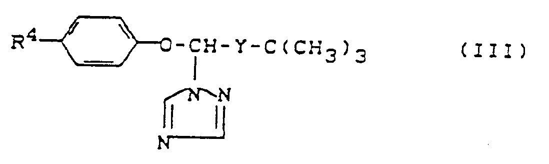 dans laquelle
a)
Y représente - CH(OH), et
R⁴ représente le chlore ou un groupe phényle,
ou bien
b)
Y représente un groupe CO et
R⁴ représente le chlore,
et/ou
au moins un dérivé azolique de formule 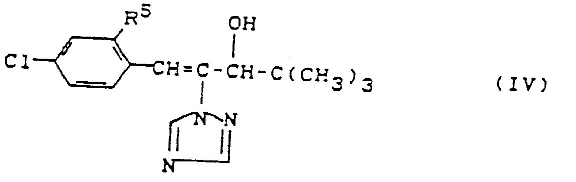 dans laquelle
R⁵ représente l'hydrogène ou le chlore,
et/ou 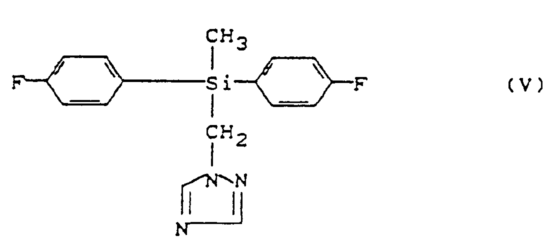 et
B) éventuellement une ou plusieurs autres substances actives, ainsi que des additifs.
en vue d'empêcher la cristallisation des substances actives de formules II à V.

2. Utilisation selon revendication 1, caractérisé en ce que l'on utilise des sels de cuivre de formule I dans laquelle
X représente un anion chlorure, bromure, iodure, thiocyanate, sulfate alkylsulfonate en C₁-C₄, alkylbenzène-sulfonate contenant 1 à 14 atomes de carbone dans la partie alkyle, ou un radical de formule
R-COO^{⊖}
dans laquelle
R représente un groupe alkyle en C₁-C₁₈ portant éventuellement un ou plusieurs substituants fluoro et/ou chloro, un groupe alkyle en C₁-C₁₈ portant éventuellement un ou plusieurs substituants hydroxy ou cycloalkyle en C₃-C₇, un groupe alcényle en C₃-C₁₈ portant éventuellement un ou plusieurs substituants fluoro et/ou chloro, un groupe alcényle en C₃-C₁₈ éventuellement substitué par un groupe hydroxy ou cycloalkyle en C₃-C₇, un groupe cycloalkyle en C₃-C₈ portant éventuellement un ou plusieurs substituants fluoro et/ou chloro, un groupe cycloalkyle en C₃-C₈ éventuellement substitué par un groupe hydroxy, alkyle en C₁-C₄ ou cycloalkyle en C₃-C₇, un groupe cycloalcényle en C₅-C₈ portant éventuellement un ou plusieurs substituants fluoro et/ou chloro, un groupe cycloalcényle en C₅-C₈ éventuellement substitué par un groupe hydroxy, alkyle en C₁-C₄ ou cycloalkyle en C₃-C₇, un groupe phényle ou naphtyle portant éventuellement un à trois substituants identiques ou différents choisis parmi le fluor, le chlore, le brome, les groupes amino, hydroxy et/ou acétyloxy,
ou bien
X représente un anion d'un acide dicarboxylique aliphatique en C₂-C₈, un anion d'un acide hydroxydicarboxylique aliphatique contenant 3 à 8 atomes de carbone et 1 à 3 groupes hydroxy, un anion d'un acide hydroxytricarboxylique aliphatique contenant 4 à 8 atomes de carbone et 1 à 3 groupes hydroxy, un anion de l'acide abiétique ou un anion dérivant d'un composé 1,3-dicarbonylé aliphatique en C₅-C₁₀ éventuellement substitué par des groupes alcoxy, de la saccharine ou de l'acide ascorbique,
m est égal à 1, 2 ou 3, et
n est égal à 1 ou 2.

3. Utilisation selon revendication 1, caractérisée en ce que l'on utilise le salicylate de cuivre.

4. Utilisation selon revendication 1, caractérisée en ce que l'on utilise le 4-(n-dodécyl)-benzène-sulfonate de cuivre.

5. Utilisation selon revendication 1, caractérisée en ce que l'on utilise le naphténate de cuivre.

6. Utilisation selon revendication 1, caractérisée en ce que l'on utilise le chlorure cuivrique.

7. Procédé pour empêcher la cristallisation de substances actives de formules II à V de la revendication 1 à l'application de bouillies de pulvérisation aqueuse contenant au moins une substance active de formule II à V, caractérisé en ce que l'on ajoute aux bouillies de pulvérisation au moins un sel de cuivre de formule I de la revendication 1.
